# NOUVEAU FASCICULE DE BREVET EUROPEEN

(11) **EP 2 253 556 B2**
(45) Date de publication et mention de la décision concernant l'opposition: **17.06.2015**
(45) Mention de la délivrance du brevet: 05.10.2011
(21) Numéro de dépôt: 10360023.5
(22) Date de dépôt: 07.05.2010
(51) Int. Cl.: B65D 57/00, B65D 81/02, B60J 10/00, B60J 10/02

(54) **Clé de transport à extraction aisée pour profilés creux ou pièces creuses déformables**
Transportschlüssel mit leichter Entfernbarkeit für Hohlprofile oder deformierbare Hohlteile
Transport key with easy removal for hollow sections or deformable hollow parts

(30) Priorité: 15.05.2009 FR 0902351
(43) Date de publication de la demande: 24.11.2010
(73) Titulaire: Rehau SA, 57340 Morhange (FR)
(72) Inventeur: Perrin, Jean-Philippe, 57380 Faulquemont (FR)
(74) Mandataire: Laukant, Holger

(56) Documents cités:
- EP-A2- 0 968 861
- WO-A2-2006/002891
- DE-A1- 2 409 859
- DE-A1-102006 038 013
- DE-T2- 60 306 403
- DE-U- 1 690 860
- DE-U1- 9 109 869
- DE-U1- 29 602 118
- FR-A1- 2 205 622
- GB-A- 2 127 884
- US-A- 5 389 409
- US-A- 5 829 378

## Description

La présente invention concerne une âme de rigidification provisoire, appelée « clé de transport », à extraction aisée, destinée à être logée dans l'espace libre d'un profilé creux ou d'une pièce creuse déformable, plus particulièrement dans la partie de réception ouverte longitudinalement d'un profilé de type joint pour pare-brise ou de grille d'auvent.

Actuellement, notamment dans le domaine de l'automobile, on utilise un certain nombre de profilés ouverts longitudinalement, par exemple ceux utilisés en tant que joint pour le pare-brise des véhicules ou en tant que joint de grille d'auvent.

Ces joints présentent classiquement une partie de réception à section ouverte, généralement de forme en U couché, qui permet le montage du joint sur un bord ou un rebord de matière par engagement de celui-ci dans la partie de réception à section ouverte. Cette partie d'engagement est généralement conformée en pince de manière à assurer une retenue du joint sur le bord ou le rebord sur lequel il doit être monté.

Le plus souvent, ces joints sont réalisés droit par extrusion, puis sont cintrés au cours d'une étape suivante de fabrication pour leur donner la forme adaptée à leur lieu final d'utilisation.

Lors de cette étape de cintrage ou des opérations ultérieures de conditionnement, de transport, de stockage ou de manutention, il est important de maintenir inchangée la géométrie de la partie de réception ouverte conformée en pince, afin de garantir ensuite un montage facile et une retenue satisfaisante du joint sur son lieu final d'utilisation.

Or, l'étape de cintrage ou les opérations ultérieures de manipulation du joint ont tendance à provoquer un écrasement de la partie de réception du joint qui se traduit par une fermeture de l'ouverture de la pince, rendant ensuite le montage du joint difficile.

Pour éviter cela, il est d'usage de rajouter dans l'espace creux de la partie de réception, un profilé plus rigide servant de cale de maintien qui garantit le maintien de la forme de la partie de réception et l'écartement d'ouverture de la pince.

Cette cale ou âme de rigidification est une bande, baguette ou tige extrudée, généralement en polyéthylène, que l'on insère dans l'espace creux du profilé par clippage de préférence directement en ligne d'extrusion et avant l'étape de cintrage. Cet insert est plus couramment appelé « clé de transport ».Une telle clé est par exemple comme du document US5829378.

Si cette clé de transport remplit parfaitement sa fonction en assurant une bonne stabilité géométrique de la partie de réception du profilé, elle est cependant particulièrement difficile à retirer pour permettre le montage du joint sur son lieu final d'utilisation.

En effet, la clé se trouve clippée à l'intérieur de la partie creuse de réception et n'est accessible que par la faible ouverture longitudinale de la pince entre ses deux faces latérales qui agissent comme deux lèvres en rappel de fermeture. Elle s'avère donc particulièrement difficile à saisir et à extraire.

Confronté à ce problème d'extraction, les opérateurs devant assurer le montage du joint utilisent généralement un tournevis ou un autre outil de ce genre qu'ils insèrent à travers l'ouverture longitudinale de la pince pour attraper la clé de transport et tirer une partie de celle-ci en dehors de la zone de réception, jusqu'à ce qu'ils puissent la saisir avec les doigts pour la retirer complètement.

Outre le fait que cette opération est longue, fastidieuse et difficile à réaliser, elle conduit souvent à des déformations ou dégradations de la partie de réception du profilé qui peuvent entraîner par la suite une mauvaise tenue du joint sur son support ou des défauts esthétiques au niveau du joint.

C'est à cette difficulté d'extraction de la clé de transport que l'invention remédie.

L'invention propose de former, à un ou plusieurs endroits le long de l'âme de rigidification, une languette de préhension qui viendra saillir hors de l'ouverture longitudinale, sensiblement perpendiculairement à celle-ci, une fois l'âme de rigidification clippée dans le profilé.

En saisissant cette languette, on pourra extraire aisément la clé par un simple geste de traction facile, rapide et naturel.

Plusieurs variantes sont envisageables pour cette languette de préhension qui peut être rapportée et solidarisée sur le corps de l'âme de rigidification.

Il s'agit d'un morceau de ruban adhésif posé transversalement à la clé, replié et enroulé autour de son corps avec recollement sur elle-même de sa face adhésive repliée.

Il peut s'agir également dans une variante hors invention d'une languette rapportée, dont l'un des bords est soudé localement ou autrement solidarisé ou fixé au corps de la clé.

Evidemment, d'autres modes de réalisation pourront être imaginés par l'homme du métier.

La pose de cette ou ces languette(s) de préhension peut être facilement automatisée et intégrée dans le processus de fabrication et de pose de la clé de transport. Les languettes de préhension selon l'invention n'entraînent ainsi qu'un faible surcoût, mais rendent un service considérable pendant la phase de montage du joint.

L'invention fournit une âme de rigidification, destinée à être logée provisoirement dans la partie de réception déformable d'un profilé qui renferme un volume creux ouvert selon une fente longitudinale, puis à être retirée hors de cette partie de réception en passant à travers cette ouverture longitudinale.

Selon l'invention, elle comporte un corps linéaire et au moins une languette de préhension qui s'étend transversalement au corps et qui dépasse hors de la partie de réception lorsque l'âme de rigidification est logée dans la partie de réception du profilé.

L'invention fournit également un profilé, notamment un joint de pare-brise et/ou de grille d'auvent, qui comprend une partie de réception déformable renfermant un volume creux ouvert selon une fente longitudinale, cette partie de réception contenant une telle âme de rigidification.

D'autres caractéristiques et avantages de l'invention apparaîtront à la lecture de la description détaillée qui va suivre, description faite en référence aux dessins annexés, dans lesquels :
- la figure 1 est une vue en perspective d'un tronçon de joint profilé équipé d'une âme de rigidification selon l'invention ;
- la figure 2 est une vue en coupe transversale du joint profilé de la figure 1 et de son âme de rigidification ;
- la figure 3 est une vue en coupe transversale du joint profilé de la figure 1 duquel on a retiré l'âme de rigidification ;
- les figures 4 et 5 sont des vues respectivement en perspective et en coupe transversale au niveau de la languette de préhension, d'une première variante d'âme de rigidification selon l'invention avec une languette de préhension formée par enroulement d'un morceau de ruban adhésif ;
- les figures 6 et 7 sont des vues respectivement en perspective et en coupe transversale au niveau de la languette de préhension, d'une deuxième variante d'âme de rigidification avec languette de préhension soudée ou collée qui ne fait pas partie de l'invention;
- les figures 8 et 9 sont des vues respectivement en perspective et en coupe transversale au niveau de la languette de préhension, d'une troisième variante d'âme de rigidification avec languette de préhension soudée ou collée qui ne fait pas partie de l'invention;
- la figure 10 est une vue en perspective d'une quatrième variante d'âme de rigidification selon l'invention avec languette de préhension formée par enroulement d'un morceau de ruban adhésif ;
- la figure 11 est une vue en perspective d'une cinquième variante d'âme de rigidification avec languette de préhension soudée ou collée qui ne fait pas partie de l'invention.

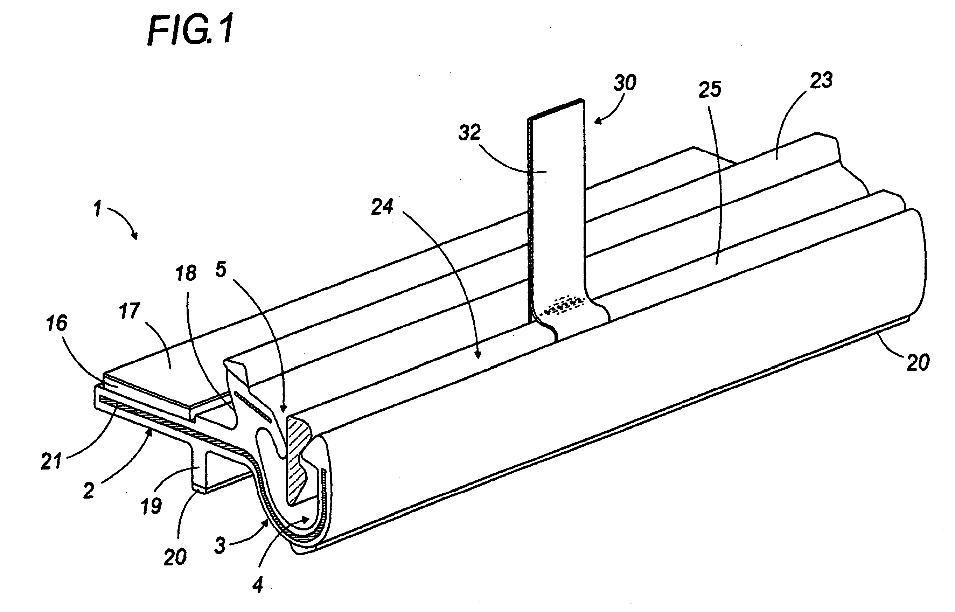

L'âme de rigidification va maintenant être décrite de façon détaillée en référence aux figures 1 à 11. Les éléments équivalents représentés sur les différentes figures porteront les mêmes références numériques.

Comme indiqué dans la partie introductive, la présente invention peut être utilisée pour différents profilés creux ou pièces creuses déformables appartenant au domaine de l'automobile ou à tout autre domaine technique, par exemple celui plus général des transports, du bâtiment, de l'aménagement intérieur ou autre.

De façon générale, elle peut avantageusement être utilisée pour toute pièce ou profilé comportant une partie creuse déformable, ouverte longitudinalement, dont la forme géométrique doit être conservée au cours d'étapes ultérieures de fabrication ou lors des opérations de stockage, de manutention, de conditionnement ou de transport de cette pièce.

Les figures annexées et la description ci-dessous se rapportent à un mode de réalisation préférentiel de l'invention correspondant à un joint profilé 1 destiné à être utilisé comme joint de pare-brise et de grille d'auvent pour un véhicule automobile. Il doit être bien compris qu'il ne s'agit que d'un exemple préférentiel d'application de l'invention, donné uniquement dans un but d'illustration et non de limitation.

On définira dans la suite de cette description les notions de haut et de bas, d'inférieur et de supérieur, d'avant et d'arrière, etc..., en fonction de l'orientation adoptée par le profilé ou par l'âme de rigidification représenté(e) sur les différentes figures. Il est évident que cette orientation ne sera pas forcément conservée en utilisation.

Sur la figure 1, on a représenté un exemple de joint profilé 1 destiné à habiller la partie basse d'un pare-brise de véhicule automobile et à assurer la liaison de celui-ci avec la grille d'auvent.

Le joint profilé 1 représenté comprend une paroi de base 2 sensiblement plane, prolongée latéralement par une partie de réception 3 délimitant un volume intérieur creux 4 ouvert sur le dessus selon une fente longitudinale 5.

La partie de réception 3 est destinée à loger et à retenir par encliquetage le système de fixation (non représenté) de la grille d'auvent du véhicule.

Pour cela, elle se présente de préférence sous la forme d'une gorge 6 à fond arrondi 7 dont les deux parois latérales interne 8 et externe 9 sont prolongées par deux lèvres de retenue respectivement interne 10 et externe 11, en regard l'une de l'autre, qui s'étendent en porte-à-faux en direction de la fente longitudinale 5 et la bordent longitudinalement.

Ces lèvres de retenue 10 et 11 présentent des formes adaptées pour coopérer avec celles correspondantes du système de fixation de la grille d'auvent. Ainsi sur l'exemple représenté, la lèvre interne 10 est une lèvre plane inclinée vers l'intérieur de la gorge de réception 6, alors que la lèvre externe 11 présente un profil sensiblement triangulaire. Les faces supérieures respectivement 12 et 13 de ces lèvres 10 et 11 constituent ainsi des rampes inclinées d'engagement facilitant l'insertion du système de fixation de la grille d'auvent, tandis que leurs faces inférieures, respectivement 14 et 15, sont conformées en crochet afin de retenir ce système de fixation et d'éviter son extraction.

Sur la paroi de base 2 du profilé s'étend une bande d'adhésif double face 16 dont la face adhésive supérieure est protégée par une pellicule de protection 17. Cette bande d'adhésif double face 16 permet, après avoir retiré la pellicule de protection 17, de solidariser par collage le joint profilé 1 contre la zone périphérique inférieure de la face intérieure du pare-brise.

La paroi latérale interne 8 de la gorge 6 se prolonge vers le haut au-dessus de la paroi de base 2 du joint. Sa partie supérieure forme ainsi une paroi de butée 18 contre laquelle vient reposer le chant du vitrage de façon à garantir un positionnement correct du joint 1 sur le pare-brise.

Sous la paroi de base 2 du joint profilé 1 s'étend longitudinalement une nervure d'appui 19 destinée à reposer contre la carrosserie du véhicule. Les parties du profilé 1 devant se retrouver en contact d'appui avec la carrosserie du véhicule, à savoir la face inférieure de la nervure d'appui 19 ainsi qu'une portion de la face extérieure du fond 7 de la partie de réception 3, sont revêtues d'une bande de garniture 20 en matière souple garantissant un appui souple contre la carrosserie afin d'éviter les tensions susceptibles d'endommager le pare-brise lors du fonctionnement du véhicule.

La rigidité du joint profilé 1 peut être renforcée par une ou plusieurs armatures métalliques internes telles que 21 et 22 par exemple.

Le joint profilé 1 représenté comporte en outre une bande d'aspect 23 en matière souple, située entre la paroi de base 2 et la partie de réception 3 du joint 1, au-dessus de la paroi de butée 18. Lorsque le joint profilé 1 est monté sur le véhicule en situation d'utilisation, cette bande d'aspect 23, qui est la seule partie visible du joint 1, réalise une liaison affleurante entre le pare-brise et la grille d'auvent. Grâce à l'utilisation d'une matière souple, elle permet de surcroît de compenser les tolérances de fabrication pouvant exister au niveau de l'épaisseur de verre du pare-brise.

A la suite de sa fabrication par extrusion, le joint profilé 1 doit subir une opération de cintrage lui conférant une courbure qui correspond à celle du bord inférieur du pare-brise sur lequel il doit être monté.

Pendant cette opération de cintrage, puis pendant toutes les étapes postérieures de transport, de manipulation ou de stockage, il est absolument indispensable de conserver sensiblement inchangée la forme d'origine de la partie de réception 3 déformable du joint, nécessaire à la pose ultérieure de la grille d'auvent. En particulier, un écartement adapté des parois latérales 8 et 9 de la gorge 6, une largeur optimale de la fente 5, ainsi qu'un positionnement correct des lèvres de retenue 10 et 11 doivent être conservés pour rendre possible un engagement facile du système de fixation de la grille d'auvent et assurer une retenue satisfaisante de celui-ci par encliquetage de formes complémentaires.

Pour garantir une parfaite stabilité géométrique de la partie de réception 3 du joint profilé 1 jusqu'au montage de la grille d'auvent, on insère de manière temporaire une âme de rigidification 24 selon l'invention, dans le volume intérieur creux 4, en la faisant passer à travers la fente longitudinale 5.

Cette âme de rigidification 24, couramment appelée « clé de transport », comprend un corps linéaire 25 qui sert de cale de maintien. De préférence, ce corps linéaire 25 est un profilé réalisé par extrusion en matière plastique rigide, par exemple en polyéthylène. Il s'agit par exemple d'une bande, d'une baguette, d'une tige ou d'un cordon extrudé.

Le corps linéaire 25 présente une forme de section variable adaptée à celle de la partie de réception 3 du joint profilé 1 dans laquelle il doit être engagé et préférentiellement complémentaire de la forme des lèvres de retenue 10 et 11 bordant la fente longitudinale 5.

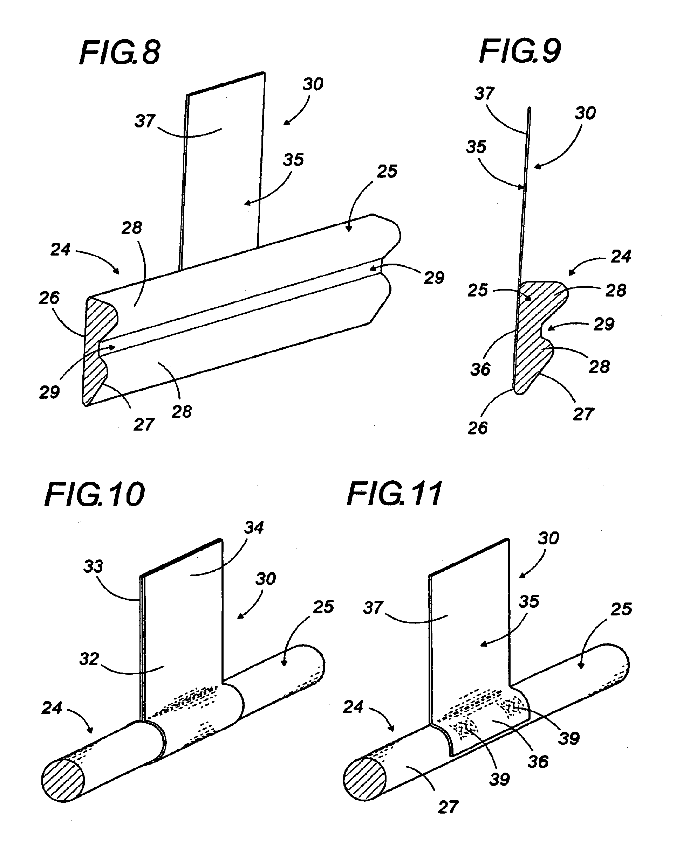

Deux exemples non limitatifs ont été représentés sur les figures annexées. Sur les figures 10 et 11, le corps 25 de l'âme de rigidification 24 présente une section de forme circulaire.

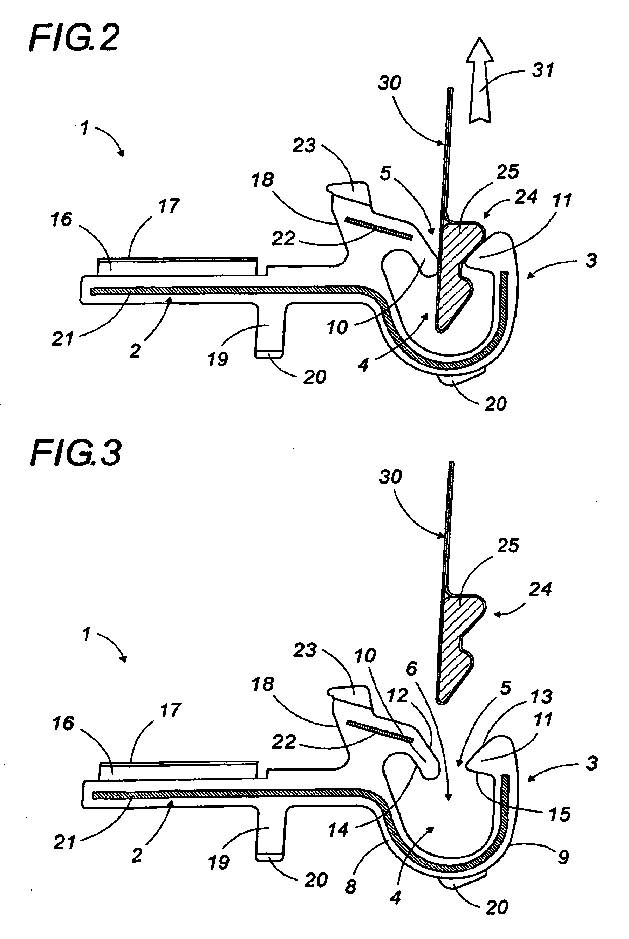

Sur les figures 1 à 9, le corps 25 présente une section de forme plus complexe à dos sensiblement plat et à face avant biconvexe. Ce corps 25 est conçu pour coopérer avec la partie de réception 3 du joint profilé 1 précédemment décrit, dans laquelle il doit être monté par clippage, comme représenté sur les figures 1 et 2, de préférence directement en ligne d'extrusion.

Le corps 25 de l'âme de rigidification 24 comporte ainsi d'un côté une paroi arrière sensiblement plane 26 contre laquelle vient s'appuyer la lèvre de retenue interne 10 du joint 1. De l'autre côté, il comporte une paroi avant biconvexe 27 qui présente deux bosses saillantes longitudinales 28 entre lesquelles s'étend une rainure longitudinale 29 dont la forme, les dimensions et l'emplacement sont appropriés pour recevoir à encliquetage la lèvre de retenue extérieure 11 de section triangulaire du joint profilé 1.

Lorsque l'âme de rigidification 24 est engagée dans la partie de réception 3 du joint profilé 1, elle se trouve dans la position représentée sur les figures 1 et 2.

Bien d'autres formes de sections peuvent être imaginées par l'homme du métier pour le corps linéaire 25, notamment une forme rectangulaire, ovale, trapézoïdale ou autre.

Selon l'invention, l'âme de rigidification 24 comporte également au moins une languette de préhension 30 qui s'étend transversalement au corps linéaire 25 de l'âme de rigidification.

Comme on peut le voir sur les figures 1 et 2, cette languette de préhension 30 dépasse hors de la partie de réception 3 du joint profilé 1, lorsque l'âme de rigidification 24 est logée dans la gorge 6 du profilé 1.

Grâce à cette languette de préhension 30, il est extrêmement facile d'extraire l'âme de rigidification 24 hors du joint profilé 1 et ainsi de libérer sa partie de réception 3 pour les étapes ultérieures de montage et notamment pour l'encliquetage du système de fixation de la grille d'auvent.

Il suffit en effet à l'opérateur de saisir la languette de préhension 30 et d'exercer sur celle-ci un effort de traction dans la direction de la flèche 31 représentée sur la figure 2 pour faire sortir, hors de la partie de réception 3 du profilé 1, la portion de l'âme de rigidification 24 entourant la languette de préhension 30. L'opérateur n'a ensuite plus qu'à attraper la portion d'âme de rigidification 24 extraite pour continuer à tirer sur celle-ci afin de faire sortir la longueur restante d'âme de rigidification 24 et ainsi libérer complètement la partie de réception 3 du joint profilé 1.

Cette extraction est donc particulièrement aisée. Elle ne nécessite qu'un effort limité de la part de l'opérateur et l'emploi d'aucun outil. De plus, tout risque d'endommagement de la partie de réception 3 du joint profilé 1 est avantageusement évité.

La languette de préhension 30 peut être située à en endroit quelconque de la longueur du corps linéaire 25, de préférence choisi en pleine longueur de celui-ci et par exemple sensiblement au milieu de celui-ci. Cependant toute autre localisation permettant à la languette de remplir sa fonction est également envisageable. Le choix de la position de réalisation de la languette de préhension 30 peut ainsi dépendre par exemple de l'endroit où doit normalement se trouver l'opérateur devant extraire l'âme de rigidification 24, par rapport au joint profilé 1.

Selon la longueur du joint profilé 1 ou selon les possibilités de positionnement de l'opérateur, l'âme de rigidification 24 peut comporter un nombre quelconque de languettes de préhension 30 réparties sur sa longueur et par exemple une, deux ou plus.

Une telle languette de préhension 30 peut être réalisée de différentes façons. Elle peut tout d'abord être réalisée d'une pièce avec le corps linéaire 25 de l'âme de rigidification 24 à la fabrication de celui-ci. Elle peut également être formée, au cours d'une deuxième étape de fabrication, directement sur le corps linaire 25 préalablement réalisé. Enfin, selon l'invention elle est réalisée indépendamment, puis rapportée et solidarisée sur le corps linéaire 25 de l'âme de rigidification 24.

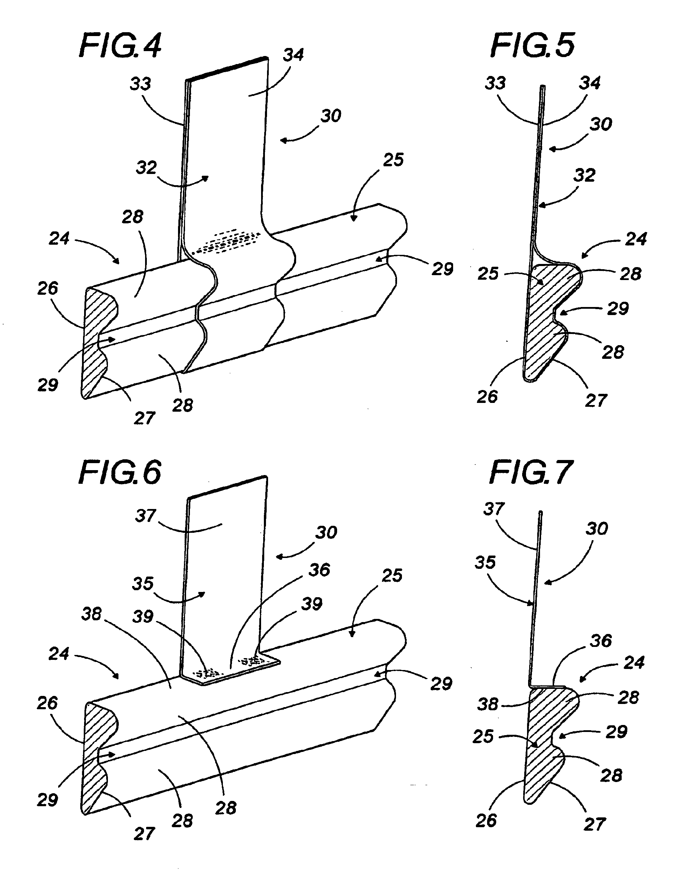

Plusieurs exemples non limitatifs de réalisation d'une telle languette de préhension 30 rapportée ont été représentés sur les figures 4 à 11.

Sur les figures 4, 5 et 10, la languette de préhension 30 est réalisée à partir d'un morceau de ruban adhésif 32. Selon l'invention, la languette de préhension 30 est formée d'un morceau de ruban adhésif 32 enroulé et collé autour du corps linéaire 25, puis replié sur lui-même de façon que ses deux extrémités 33 et 34 soient collées l'une sur l'autre.

Sur les figures 6 à 9 et 11, la languette de préhension 30 est un morceau de matière plastique 35 d'épaisseur simple, dont la partie inférieure 36 est solidarisée au corps linéaire 25 de l'âme de rigidification et dont la partie supérieure 37 reste libre et constitue la zone de préhension de la languette.

La partie inférieure 36 de la languette peut être solidarisée au corps linéaire 25 à différents niveaux. Elle peut par exemple être fixée sur le chant supérieur 38 du corps linéaire 25 comme représenté sur les figures 6 et 7. Elle peut également être fixée sur la paroi arrière 26 du corps 25 comme sur les figures 8 et 9 ou sur la paroi avant 27 du corps 25 comme sur la figure 11.

La partie inférieure 36 de la languette en contact avec le corps linéaire 25 peut être de faible superficie et ne recouvrir que partiellement le chant ou la paroi du corps 25 sur lequel elle est fixée. Cependant, elle peut également être de superficie plus importante et recouvrir localement, sensiblement tout le chant ou la paroi du corps 25 sur lequel elle est solidarisée, ce qui assure une fixation de plus grande solidité (figures 8 et 9).

Dans les variantes représentées sur les figures 6 à 9 et 11, la partie inférieure 36 du morceau de matière plastique 35 servant de languette de préhension 30 est solidarisée au corps linéaire 25 par collage ou préférentiellement par soudage. Un tel collage ou soudage peut être réalisé sur toute la surface de la partie inférieure 36 en contact avec le corps 25 ou de préférence uniquement au niveau d'une ou plusieurs zones de fixation localisées 39 comme représenté sur les figures 6 et 11.

Avantageusement, dans les modes de réalisation des figures 6 à 9 et 11, la partie inférieure 36 de la languette de fixation 30, qui est la seule à être en contact avec le corps linaire 25, ne constitue qu'une faible surépaisseur au niveau du corps linéaire 25. Elle n'est donc pas gênante pour l'insertion et/ou pour l'extraction de l'âme de rigidification 24 dans ou hors de la partie de réception 3 du joint profilé 1.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications.

## Revendications

1. Âme de rigidification (24), destinée à être logée provisoirement dans la partie de réception (3) déformable d'un profilé (1) qui renferme un volume creux (4) ouvert selon une fente longitudinale (5), puis à être retirée hors de cette partie de réception (3) en passant à travers cette ouverture longitudinale (5), et comportant un corps linéaire (25) et au moins une languette de préhension (30) qui s'étend transversalement au corps (25) et qui dépasse hors de la partie de réception (3) lorsque l'âme de rigidification (24) est logée dans la partie de réception (3) du profilé (1), laquelle languette de préhension (30) est rapportée et solidarisée sur le corps (25) de l'âme de rigidification (24),
**caractérisée en ce que**
la languette de préhension (30) est formée d'un morceau de ruban adhésif (32) posé transversalement à l'âme de rigidification (24), replié et enroulé autour de son corps (25) avec recollement sur elle-même de sa face adhésive repliée.

2. Âme de rigidification (24) selon la revendication précédente **caractérisée en ce que** le corps linéaire (25) est une bande, une baguette, une tige ou un cordon extrudé.

3. Âme de rigidification (24) selon l'une quelconque des revendications précédentes **caractérisée en ce que** le corps linéaire (25) est réalisé en polyéthylène.

4. Âme de rigidification (24) selon l'une quelconque des revendications précédentes **caractérisée en ce que** le corps linéaire (25) présente une section de forme circulaire, rectangulaire, ovale, trapézoïdale ou à dos sensiblement plat et à face avant biconvexe.

5. Profilé (1) comprenant une partie de réception (3) déformable qui renferme un volume creux (4) ouvert selon une fente longitudinale (5), caractérisé en ce la partie de réception (3) contient une âme de rigidification (24) selon l'une quelconque des revendications précédentes.

6. Profilé (1) selon la revendication précédente **caractérisé en ce qu'**il s'agit d'un joint de pare-brise ou de grille d'auvent.

## Patentansprüche

1. Versteifungskern (24), dazu bestimmt, provisorisch im verformbaren Aufnahmeteil (3) eines Profilstücks (1) untergebracht zu sein, das einen durch einen Längsspalt (5) geöffneten Hohlraum (4) birgt, und dann durch diese Längsöffnung (5) aus diesem Aufnahmeteil (3) zurückgezogen zu werden, und umfassend einen linearen Körper (25) und mindestens eine Grifflasche (30), die sich quer zum Körper (25) erstreckt und die vom Aufnahmeteil (3) hinausragt, wenn der Versteifungskern (24) in dem Aufnahmeteil (3) des Profilstücks (1) untergebracht ist, wobei die Grifflasche (30) auf dem Körper (25) des Versteifungskerns (24) angebracht und befestigt ist, **gekennzeichnet dadurch, dass** die Grifflasche (30) aus einem Stück Klebeband (32) gebildet ist, das quer zum Versteifungskern (24) angeordnet und um seinen Körper (25) umgefalzt und gerollt ist, wobei sie auf ihrer umgefalzten Klebefläche wieder mit sich selbst verklebt ist.

2. Versteifungskern (24) nach dem vorherigen Anspruch, **gekennzeichnet dadurch, dass** der lineare Körper (25) ein Band ist, ein Stab, ein Schaft oder eine extrudierte Schnur.

3. Versteifungskern (24) nach einem beliebigen der vorherigen Ansprüche, **gekennzeichnet dadurch, dass** der lineare Körper (25) aus Polyäthylen verwirklicht wird.

4. Versteifungskern (24) nach einem beliebigen der vorherigen Ansprüche, **gekennzeichnet dadurch, dass** der lineare Körper (25) einen runden, rechteckigen, ovalen oder trapezförmigen Querschnitt aufweist oder mit im Wesentlichen flacher Rückseite und bikonvexer Vorderseite.

5. Profilstück (1) mit einem verformbaren Aufnahmeteil (3), das einen durch einen Längsspalt (5) geöffneten Hohlraum (4) birgt, **gekennzeichnet dadurch, dass** das Aufnahmeteil (3) einen Versteifungskern (24) nach einem beliebigen der vorherigen Ansprüche enthält.

6. Profilstück (1) nach dem vorherigen Anspruch, **gekennzeichnet dadurch, dass** es sich um die Dichtung einer Windschutzscheibe oder eines Windlaufgitters handelt.

## Claims

1. Stiffening core (24), intended to be provisionally housed in the deformable reception part (3) of a pro-file (1) which encompasses a hollow volume (4) open along a longitudinal slit (5), then to be withdrawn out of this reception part (3) through this longitudinal opening (5), and including a linear body (25) and at least one grip tab (30) which extends transversely to the body (25) and which exceeds the reception part (3) when the stiffening core (24) is housed in the reception part (3) of the profile (1), which grip tab (30) is fixed to and formed onto the body (25) of the stiffening core (24), **characterized in that** the grip tab (30) is formed by a piece of adhesive tape (32) positioned transversely to the stiffening core (24), folded and rolled-up around its body (25) with its folded adhesive face being stuck to itself.

2. Stiffening core (24) according to the previous claim **characterized in that** the linear body (25) is a tape, a stick, a stem or an extruded cord.

3. Stiffening core (24) according to any of the preceding claims **characterized in that** the linear body (25) is made in polythene.

4. Stiffening core (24) according to any of the preceding claims **characterized in that** the linear body (25) presents a circular, rectangular, oval, trapezoidal section or with essentially flat back and biconvex front.

5. Profile (1) comprising a deformable reception part (3) which encompasses a hollow volume (4) open by a longitudinal slit (5), **characterized in that** the reception part (3) contains a stiffening core (24) according to any of the preceding claims.

6. Profile (1) according to the previous claim **characterized in that** it regards a windscreen joint or cowl vent grille.
